# EUROPEAN PATENT SPECIFICATION

(11) **EP 4 140 767 B1**
(45) Date of publication and mention of the grant of the patent: **30.10.2024**
(21) Application number: 22189889.3
(22) Date of filing: 11.08.2022
(51) Int. Cl.: B60C 9/20, B60C 29/06, B60C 9/18, B60C 9/22

(54) **HEAVY DUTY PNEUMATIC TIRE**
SCHWERLASTLUFTREIFEN
PNEUMATIQUE POIDS LOURD

(30) Priority: 24.08.2021 JP 2021135983; 09.02.2022 JP 2022018694
(43) Date of publication of application: 01.03.2023
(73) Proprietor: Sumitomo Rubber Industries, Ltd., Kobe-shi, Hyogo 651-0072 (JP)
(72) Inventor: YOSHINO, Masayuki, Kobe-shi, 651-0072 (JP); KITANI, Naofumi, Kobe-shi, 651-0072 (JP)
(74) Representative: Manitz Finsterwald Patent- und Rechtsanwaltspartnerschaft mbB

(56) References cited:
- EP-A1- 3 967 517
- EP-A2- 1 800 903
- WO-A1-2020/053071
- US-A1- 2010 084 069
- US-A1- 2017 210 172
- US-A1- 2022 032 689

## Description

### BACKGROUND OF THE INVENTION

### Field of the Invention

The present invention relates to a heavy duty pneumatic tire.

### Background Art

From the viewpoint of drainage performance, at least three circumferential grooves are formed on the tread of a heavy duty pneumatic tire (hereinafter, referred to as tire). Among the circumferential grooves formed on the tread, the circumferential groove located on each outer side in the axial direction is a shoulder circumferential groove. The stiffness of the portion where the circumferential grooves are formed is lower than the stiffness of the portion where the circumferential grooves are not formed.

A belt and a band are provided between the tread and a carcass. The belt includes a plurality of belt plies aligned in the radial direction. Each belt ply includes a large number of belt cords aligned with each other. Normally, steel cords are used as the belt cords. The band includes a helically wound band cord. A cord formed from an organic fiber such as nylon fiber, or a steel cord is used as the band cord. The stiffness of a tread portion is controlled by adjusting the configuration of the belt or the band (for example, Japanese Laid-Open Patent Publication No. H9-105084).

In a tire in a running state, deformation and restoration are repeated. Accordingly, the shape of the tire is changed. The ground-contact shape of the tire is changed, so that there is a concern about a decrease in uneven wear resistance.

In a running state of the tire, a tread end portion moves actively. Low-flatness tires having an aspect ratio of not greater than 65% include a tire having a wide tread surface. In a low-flatness tire, a shape change tends to be larger than that in a high-flatness tire. In order to suppress a shape change, use of a full band including a helically wound band cord is considered.

The belt of a heavy duty pneumatic tire normally includes four belt plies stacked in the radial direction. When a full band is added in order to suppress a shape change, the mass of the tire increases. The tire mass influences the fuel efficiency and load capacity of a vehicle. Establishment of a technology capable of achieving suppression of a shape change due to running while taking into consideration the influence on tire mass is required.

The band cord included in the full band extends substantially in the circumferential direction. A force acts on the full band of the tire in a running state so as to spread from the inner side toward the outer side in the radial direction. This force increases the tension of the band cord.

The tire bends when coming into contact with a road surface. Accordingly, the force acting on the full band is decreased, so that the tension of the band cord is decreased. When the tire becomes separated from the road surface to be restored, the force acting on the full band is increased, so that the tension of the band cord is increased. In the band cord of the tire in a running state, fluctuation of the tension is repeated. There is a concern that a break may occur in the band cord depending on the degree of fluctuation of the tension. When the band cord becomes broken, the holding force thereof is decreased. In this case, the full band may no longer be able to contribute to suppression of a shape change. When edge bands are added in order to protect a full band, the tire mass further increases.

Further pneumatic tires are known from EP 3 967 517 A1, US 2017/210172 A1, EP 1 800 903 A2, US 2010/084069 A1, and WO 2020/053071 A1.

The present invention has been made in view of the above circumstances. An object of the present invention is to provide a heavy duty pneumatic tire that can achieve suppression of a mass increase and suppression of a shape change due to running.

### SUMMARY OF THE INVENTION

A heavy duty pneumatic tire according to an aspect of the present invention has a nominal aspect ratio of not greater than 65%. The heavy duty pneumatic tire includes: a tread having at least three circumferential grooves formed thereon; a pair of sidewalls each connected to an end of the tread and located inward of the tread in a radial direction; a pair of beads each located inward of the sidewall in the radial direction; a carcass located inward of the tread and the pair of sidewalls and extending on and between one bead and the other bead; a reinforcing layer located inward of the tread in the radial direction; and a buffer layer located between the carcass and the reinforcing layer in the radial direction. Among the at least three circumferential grooves, a circumferential groove located on each outer side in an axial direction is a shoulder circumferential groove. The reinforcing layer includes a belt including a large number of belt cords aligned with each other, and a band including a helically wound band cord. The belt includes a first belt ply, a second belt ply, and a third belt ply. The first belt ply, the second belt ply, and the third belt ply are aligned in the radial direction in this order. A direction in which the belt cords included in the first belt ply are tilted is opposite to a direction in which the belt cords included in the second belt ply are tilted. The band includes a full band disposed such that both ends thereof are opposed to each other across an equator plane, and a pair of edge bands each located outward of the end of the full band in the radial direction. The full band is located between the first belt ply and the second belt ply in the radial direction. The buffer layer is formed from a crosslinked rubber.

Preferably, in the heavy duty pneumatic tire, the buffer layer has a complex elastic modulus of not less than 7.0 MPa and not greater than 12.0 MPa.

Preferably, in the heavy duty pneumatic tire, each end of the full band is located outward of the shoulder circumferential groove in the axial direction.

Preferably, in the heavy duty pneumatic tire, a distance in the axial direction from the end of the full band to an inner end of the edge band is not less than 10 mm.

Preferably, in the heavy duty pneumatic tire, each end of the buffer layer is located inward of the inner end of the edge band in the axial direction.

Preferably, in the heavy duty pneumatic tire, a ratio of a width in the axial direction of the buffer layer to a width in the axial direction of the first belt ply is not less than 50%.

Preferably, the heavy duty pneumatic tire further includes a pair of cushion layers located outward of the buffer layer in the axial direction. Each of the pair of cushion layers is located between the reinforcing layer and the carcass at an end of the reinforcing layer. Each end of the buffer layer is located outward of an inner end of the cushion layer in the axial direction.

Preferably, in the heavy duty pneumatic tire, the complex elastic modulus of the buffer layer is higher than a complex elastic modulus of each cushion layer.

According to the present invention, a heavy duty pneumatic tire that can achieve suppression of a mass increase and suppression of a shape change due to running, is obtained.

### BRIEF DESCRIPTION OF THE DRAWINGS

FIG. 1 is a cross-sectional view showing a part of a heavy duty pneumatic tire according to an embodiment of the present invention;
FIG. 2 is a schematic diagram illustrating the configuration of a reinforcing layer;
FIG. 3 is an enlarged cross-sectional view showing a part of the tire in FIG. 1;
FIG. 4 is a cross-sectional view of the tire in FIG. 1, taken along an equator plane.

### DETAILED DESCRIPTION

Hereinafter, the present invention will be described in detail based on preferred embodiments with appropriate reference to the drawings.

In the present disclosure, a state where a tire is fitted on a normal rim, the internal pressure of the tire is adjusted to a normal internal pressure, and no load is applied to the tire is referred to as a normal state.

In the present disclosure, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between right and left beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present disclosure, the "nominal aspect ratio" is the "nominal aspect ratio" included in "tyre designation" specified in JIS D4202 "Automobile tyres-Designation and dimensions".

In the present disclosure, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present disclosure, the number of cords included per 5 cm of a tire element, including aligned cords, is represented as the density of cords included in this element (unit: ends/5 cm). Unless otherwise specified, the density of the cords is obtained in a cross-section of the element obtained by cutting the element along a plane perpendicular to the longitudinal direction of the cords.

In the present disclosure, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present disclosure, a complex elastic modulus at a temperature of 70°C, of a component formed from a crosslinked rubber, of the components included in the tire, is measured using a viscoelasticity spectrometer ("VES" manufactured by Iwamoto Seisakusho) under the following conditions according to the standards of JIS K6394.
Initial strain = 10%
Dynamic strain = 2%
Frequency = 10 Hz
Deformation mode = tension

In this measurement, a test piece is sampled from the tire. When a test piece cannot be sampled from the tire, a test piece is sampled from a sheet-shaped crosslinked rubber (hereinafter, also referred to as a rubber sheet) obtained by pressurizing and heating a rubber composition, which is used for forming the component to be measured, at a temperature of 170°C for 12 minutes.

In the present disclosure, a breaking load of a steel cord is measured in accordance with the standards of JIS G3510. The tensile speed to obtain the breaking load is set at 50 mm/min.

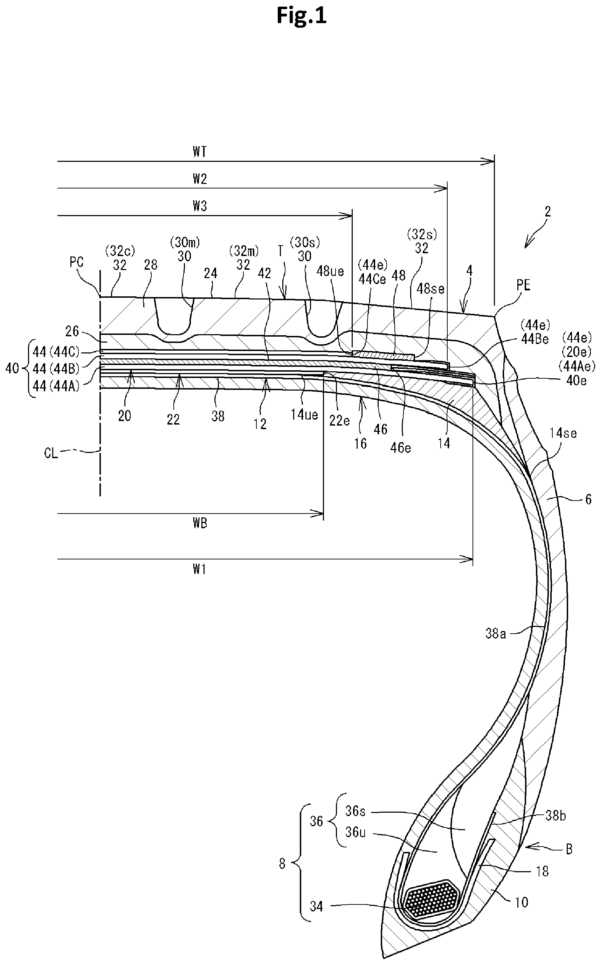

FIG. 1 shows a part of a heavy duty pneumatic tire 2 (hereinafter, also referred to simply as "tire 2") according to an embodiment of the present invention. The tire 2 is mounted to a vehicle such as a truck and a bus. The nominal aspect ratio of the tire 2 is not greater than 65%. In other words, the tire 2 has a nominal aspect ratio of not greater than 65%. The tire 2 is a low-flatness tire.

FIG. 1 shows a part of a cross-section (hereinafter, also referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

The tire 2 includes a tread 4, a pair of sidewalls 6, a pair of beads 8, a pair of chafers 10, a carcass 12, a pair of cushion layers 14, an inner liner 16, a pair of steel fillers 18, a reinforcing layer 20, and a buffer layer 22.

The tread 4 comes into contact with a road surface at an outer surface thereof. The outer surface is a tread surface 24. In FIG. 1, reference character PC represents the point of intersection of the tread surface 24 and the equator plane CL. The point of intersection PC is also referred to as the equator of the tire 2.

In FIG. 1, reference character PE represents an end of the tread surface 24. A double-headed arrow WT indicates the width of the tread surface 24. The width WT of the tread surface 24 is the distance in the axial direction from one end PE of the tread surface 24 to the other end PE of the tread surface 24. In the tire 2, when the ends PE of the tread surface 24 cannot be identified from the appearance, the positions, on the tread surface 24, corresponding to the outer ends in the axial direction of a ground-contact surface obtained when the normal load is applied to the tire 2 in the normal state and the tire 2 is brought into contact with a flat surface at a camber angle of 0° are defined as the ends PE of the tread surface 24.

The tread 4 includes a base portion 26 and a cap portion 28 located radially outward of the base portion 26. The base portion 26 is formed from a crosslinked rubber having low heat generation properties. The cap portion 28 is formed from a crosslinked rubber for which wear resistance and grip performance are taken into consideration. As shown in FIG. 1, the base portion 26 covers the entirety of the reinforcing layer 20. The cap portion 28 covers the entirety of the base portion 26.

In the tire 2, at least three circumferential grooves 30 are formed on the tread 4. On the tread 4 of the tire 2 shown in FIG. 1, four circumferential grooves 30 are formed. These circumferential grooves 30 are aligned in the axial direction and continuously extend in the circumferential direction.

Among the four circumferential grooves 30 formed on the tread 4, the circumferential groove 30 located on each outer side in the axial direction is a shoulder circumferential groove 30s. The circumferential groove 30 located inward of the shoulder circumferential groove 30s in the axial direction is a middle circumferential groove 30m. In the tire 2, the four circumferential grooves 30 include a pair of the middle circumferential grooves 30m and a pair of the shoulder circumferential grooves 30s.

In the tire 2, from the viewpoint of contribution to drainage performance and traction performance, the width in the axial direction of each middle circumferential groove 30m is preferably not less than 2% and not greater than 10% of the width WT of the tread surface 24. The depth of each middle circumferential groove 30m is preferably not less than 13 mm and not greater than 25 mm. The width in the axial direction of each shoulder circumferential groove 30s is preferably not less than 1% and not greater than 7% of the width WT of the tread surface 24. The depth of each shoulder circumferential groove 30s is preferably not less than 13 mm and not greater than 25 mm.

As described above, at least three circumferential grooves 30 are formed on the tread 4. Accordingly, at least four land portions 32 are formed in the tread 4. On the tread 4 of the tire 2 shown in FIG. 1, four circumferential grooves 30 are formed, so that five land portions 32 are formed in the tread 4. These land portions 32 are aligned in the axial direction and continuously extend in the circumferential direction.

Among the five land portions 32 formed in the tread 4, the land portion 32 located on each outer side in the axial direction is a shoulder land portion 32s. Each shoulder land portion 32s is located outward of the shoulder circumferential groove 30s in the axial direction and includes the end PE of the tread surface 24. The land portions 32 located inward of the shoulder land portions 32s in the axial direction are middle land portions 32m. The land portion 32 located inward of the middle land portions 32m in the axial direction is a center land portion 32c. In the tire 2, the five land portions 32 include the center land portion 32c, a pair of the middle land portions 32m, and a pair of the shoulder land portions 32s.

In the tire 2, the width in the axial direction of the center land portion 32c is not less than 10% and not greater than 18% of the width WT of the tread surface 24. The width in the axial direction of each middle land portion 32m is not less than 10% and not greater than 18% of the width WT of the tread surface 24. The width in the axial direction of each shoulder land portion 32s is not less than 15% and not greater than 25% of the width WT of the tread surface 24. The width in the axial direction of each land portion 32 is represented as the width in the axial direction of the top surface of the land portion 32 which forms a part of the tread surface 24.

In the tire 2, the land portion 32 located at the center in the axial direction among the land portions 32 formed in the tread 4, that is, the center land portion 32c, is located on the equator plane CL. The tire 2 includes the tread 4 formed such that the land portion 32 is located on the equator plane CL. The tread 4 may be formed such that the circumferential groove 30 is located on the equator plane CL.

Each sidewall 6 is connected to an end of the tread 4. The sidewall 6 extends radially inward from the end of the tread 4. The sidewall 6 is located inward of the tread 4 in the radial direction. The sidewall 6 is formed from a crosslinked rubber.

Each bead 8 is located inward of the sidewall 6 in the radial direction. The bead 8 includes a core 34 and an apex 36.

The core 34 extends in the circumferential direction. The core 34 includes a wound wire made of steel. The core 34 has a substantially hexagonal cross-sectional shape.

The apex 36 is located outward of the core 34 in the radial direction. The apex 36 includes an inner apex 36u and an outer apex 36s. The inner apex 36u extends radially outward from the core 34. The outer apex 36s is located radially outward of the inner apex 36u. The inner apex 36u is formed from a hard crosslinked rubber. The outer apex 36s is formed from a crosslinked rubber that is more flexible than the inner apex 36u.

Each chafer 10 is located outward of the bead 8 in the axial direction. The chafer 10 is located inward of the sidewall 6 in the radial direction. The chafer 10 comes into contact with a rim (not shown). The chafer 10 is formed from a crosslinked rubber for which wear resistance is taken into consideration.

The carcass 12 is located inward of the tread 4, the pair of sidewalls 6, and the pair of chafers 10. The carcass 12 extends on and between one bead 8 and the other bead 8.

The carcass 12 includes at least one carcass ply 38. The carcass 12 of the tire 2 is composed of one carcass ply 38. The carcass ply 38 is turned up around each core 34 from the inner side toward the outer side in the axial direction. The carcass ply 38 has a ply body 38a which extends from one core 34 to the other core 34, and a pair of turned-up portions 38b which are connected to the ply body 38a and turned up around the respective cores 34 from the inner side toward the outer side in the axial direction.

The carcass ply 38 includes a large number of carcass cords aligned with each other, which are not shown. These carcass cords are covered with a topping rubber. Each carcass cord intersects the equator plane CL. In the tire 2, an angle of the carcass cords relative to the equator plane CL (hereinafter, referred to as "intersection angle of the carcass cords) is not less than 70° and not greater than 90°. The carcass 12 has a radial structure. The carcass cords of the tire 2 are steel cords.

Each cushion layer 14 is located outward of the buffer layer 22 in the axial direction. The cushion layer 14 is located between the reinforcing layer 20 and the carcass 12 (specifically, the ply body 38a of the carcass ply 38) at an end 20e of the reinforcing layer 20. In the axial direction, an inner end 14ue of the cushion layer 14 is located inward of the end 20e of the reinforcing layer 20. In the axial direction, an outer end 14se of the cushion layer 14 is located outward of the end 20e of the reinforcing layer 20. In the radial direction, the outer end 14se of the cushion layer 14 is located inward of the end 20e of the reinforcing layer 20. The cushion layer 14 is formed from a flexible crosslinked rubber. From the viewpoint of preventing occurrence of damage at the end 20e of the reinforcing layer 20, a complex elastic modulus E*c of the cushion layer 14 is preferably not less than 3.0 MPa and not greater than 6.0 MPa.

The inner liner 16 is located inward of the carcass 12. The inner liner 16 is joined to the inner surface of the carcass 12 via an insulation (not shown). The inner liner 16 forms an inner surface of the tire 2. The inner liner 16 is formed from a crosslinked rubber that has an excellent air blocking property. The inner liner 16 maintains the internal pressure of the tire 2.

Each steel filler 18 is located at a bead portion B. The steel filler 18 is turned up around the core 34 from the inner side toward the outer side in the axial direction along the carcass ply 38. The steel filler 18 includes a large number of filler cords aligned with each other, which are not shown. Steel cords are used as filler cords.

The reinforcing layer 20 is located inward of the tread 4 in the radial direction. The reinforcing layer 20 is located between the tread 4 and the carcass 12. The reinforcing layer 20 includes a belt 40 and a band 42.

The belt 40 includes at least three belt plies 44. Each belt ply 44 is disposed such that both ends 44e thereof are opposed to each other across the equator plane CL.

The belt 40 includes a first belt ply 44A, a second belt ply 44B, and a third belt ply 44C. The first belt ply 44A, the second belt ply 44B, and the third belt ply 44C are aligned in the radial direction in this order.

In the tire 2, among the at least three belt plies 44 included in the belt 40, the belt ply 44 located on the innermost side in the radial direction is the first belt ply 44A, and the first belt ply 44A, the second belt ply 44B, and the third belt ply 44C are aligned in this order from the inner side. The belt 40 includes the first belt ply 44A, the second belt ply 44B located outward of the first belt ply 44A in the radial direction, and the third belt ply 44C located outward of the second belt ply 44B in the radial direction. In the tire 2, the belt 40 may be formed such that the first belt ply 44A, the second belt ply 44B, and the third belt ply 44C are aligned in this order from the outer side in the radial direction.

In the tire 2, the belt 40 may be composed of four or more belt plies 44. From the viewpoint of reducing the mass of the tire 2, the belt 40 is preferably composed of three belt plies 44, that is, the first belt ply 44A, the second belt ply 44B, and the third belt ply 44C.

As shown in FIG. 1, an end 44Ae of the first belt ply 44A is located outward of the shoulder circumferential groove 30s in the axial direction. An end 44Be of the second belt ply 44B is located outward of the shoulder circumferential groove 30s in the axial direction. An end 44Ce of the third belt ply 44C is located outward of the shoulder circumferential groove 30s in the axial direction. In the tire 2, the end 44Ce of the third belt ply 44C may be located inward of the shoulder circumferential groove 30s in the axial direction. From the viewpoint of preventing damage, the third belt ply 44C is disposed such that the end 44Ce of the third belt ply 44C does not overlap the shoulder circumferential groove 30s in the radial direction.

In FIG. 1, a length indicated by reference character W1 is the width in the axial direction of the first belt ply 44A. A length indicated by reference character W2 is the width in the axial direction of the second belt ply 44B. A length indicated by reference character W3 is the width in the axial direction of the third belt ply 44C. The width in the axial direction of each belt ply 44 is the distance in the axial direction from one end 44e of the belt ply 44 to the other end 44e of the belt ply 44.

In the tire 2, the first belt ply 44A has the largest width W1 in the axial direction, and the third belt ply 44C has the smallest width W3 in the axial direction. The width W2 in the axial direction of the second belt ply 44B is smaller than the width W1 in the axial direction of the first belt ply 44A and larger than the width W3 in the axial direction of the third belt ply 44C.

In the tire 2, among the at least three belt plies 44 included in the belt 40, the belt ply 44 located on the innermost side in the radial direction is the first belt ply 44A having the largest width W1 in the axial direction. The belt 40 effectively increases the stiffness of a tread portion T.

In the tire 2, from the viewpoint of effectively increasing the stiffness of the tread portion T, the ratio (W1/WT) of the width W1 in the axial direction of the first belt ply 44A to the width WT of the tread 4 is preferably not less than 0.75 and not greater than 0.95. The ratio (W2/WT) of the width W2 in the axial direction of the second belt ply 44B to the width WT of the tread 4 is preferably not less than 0.70 and not greater than 0.90. The width W3 in the axial direction of the third belt ply 44C is set as appropriate according to the specifications of the tire 2.

In the tire 2, the width in the axial direction of the belt 40 is represented as the width in the axial direction of the belt ply 44 having the largest width in the axial direction. As described above, the first belt ply 44A has the largest width W1 in the axial direction. The width in the axial direction of the belt 40 of the tire 2 is represented as the width W1 in the axial direction of the first belt ply 44A. In the tire 2, the end 44Ae of the first belt ply 44A is an end 40e of the belt 40. The end 40e of the belt 40 is also the end 20e of the reinforcing layer 20.

The band 42 includes a full band 46 and a pair of edge bands 48. The full band 46 is disposed such that both ends 46e thereof are opposed to each other across the equator plane CL. In the axial direction, each end 46e of the full band 46 is located inward of the end 40e of the belt 40.

The pair of edge bands 48 are disposed so as to be spaced apart from each other in the axial direction across the equator plane CL. In the tire 2, the third belt ply 44C which forms a part of the belt 40 is located between the pair of edge bands 48.

In the tire 2, each edge band 48 is located between the tread 4 and the full band 46. The edge band 48 is located outward of the end 46e of the full band 46 in the radial direction. In the axial direction, an inner end 48ue of the edge band 48 is located inward of the end 46e of the full band 46. An outer end 48se of the edge band 48 is located outward of the end 46e of the full band 46 in the axial direction. The edge band 48 overlaps the end 46e of the full band 46 in the radial direction. The position of the outer end 48se of the edge band 48 may coincide with the position of the end 46e of the full band 46 in the axial direction. In this case as well, the edge band 48 is located outward of the end 46e of the full band 46 in the radial direction.

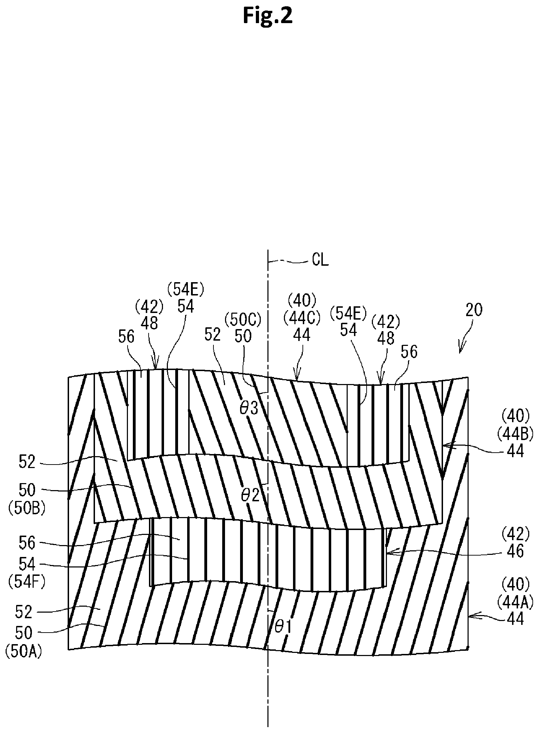

FIG. 2 shows the configuration of the reinforcing layer 20. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet of FIG. 2 is the outer side in the radial direction, and the back side of this drawing sheet is the inner side in the radial direction.

As shown in FIG. 2, each belt ply 44 included in the belt 40 includes a large number of belt cords 50 aligned with each other. In FIG. 2, for the convenience of description, the belt cords 50 are represented by solid lines, but the belt cords 50 are covered with a topping rubber 52.

The belt cords 50 of the tire 2 are steel cords. The density of the belt cords 50 in each belt ply 44 is not less than 15 ends/5 cm and not greater than 30 ends/5 cm.

In each belt ply 44, the belt cords 50 are tilted relative to the circumferential direction.

The direction in which the belt cords 50 included in the first belt ply 44A are tilted (hereinafter, referred to as tilt direction of first belt cords 50A) is opposite to the direction in which the belt cords 50 included in the second belt ply 44B are titled (hereinafter, referred to as tilt direction of second belt cords 50B). In the tire 2, the belt 40 is formed such that the first belt cords 50A and the second belt cords 50B intersect each other.

The direction in which the belt cords 50 included in the third belt ply 44C are tilted (hereinafter, referred to as tilt direction of third belt cords 50C) is the same as the tilt direction of the second belt cords 50B. The tilt direction of the third belt cords 50C may be opposite to the tilt direction of the second belt cords 50B.

In FIG. 2, an angle θ1 is an angle of the belt cords 50 included in the first belt ply 44A relative to the equator plane CL (hereinafter, referred to as tilt angle θ1 of the first belt cords 50A). An angle θ2 is an angle of the belt cords 50 included in the second belt ply 44B relative to the equator plane CL (hereinafter, referred to as tilt angle θ2 of the second belt cords 50B). An angle θ3 is an angle of the belt cords 50 included in the third belt ply 44C relative to the equator plane CL (hereinafter, referred to as tilt angle θ3 of the third belt cords 50C).

In the tire 2, each of the tilt angle θ1 of the first belt cords 50A, the tilt angle θ2 of the second belt cords 50B, and the tilt angle θ3 of the third belt cords 50C is preferably not less than 10° and preferably not greater than 60°.

From the viewpoint of effectively restraining movement of the tread portion T and obtaining a ground-contact surface having a stable shape, the tilt angle θ1 of the first belt cords 50A is more preferably not less than 15° and more preferably not greater than 30°. The tilt angle θ1 of the first belt cords 50A is further preferably not greater than 20°. The tilt angle θ2 of the second belt cords 50B is more preferably not less than 15° and more preferably not greater than 30°. The tilt angle θ2 of the second belt cords 50B is further preferably not greater than 20°. The tilt angle θ3 of the third belt cords 50C is more preferably not less than 15° and more preferably not greater than 50°.

As described above, the carcass ply 38 includes the carcass cords, and the intersection angle of the carcass cords is not less than 70° and not greater than 90°. In the tire 2, the belt ply 44 closest to the carcass ply 38 is the first belt ply 44A. In the tire 2, the difference between the tilt angle θ1 of the first belt cords 50A and the intersection angle of the carcass cords is large.

As shown in FIG. 2, the full band 46 and the edge bands 48 included in the band 42 each include a helically wound band cord 54. In FIG. 2, for the convenience of description, the band cords 54 are represented by solid lines, but each band cord 54 is covered with a topping rubber 56.

In the tire 2, the band cords 54 are steel cords or cords formed from an organic fiber (hereinafter, organic fiber cords). In the case where organic fiber cords are used as the band cords 54, examples of the organic fiber include nylon fibers, polyester fibers, rayon fibers, and aramid fibers. In the tire 2, as a band cord 54F of the full band 46 and band cords 54E of the edge bands 48, the same cord may be used, or different cords may be used. The band cords 54 used for the full band 46 and the edge bands 48 are determined according to the specifications of the tire 2.

As described above, the full band 46 includes the helically wound band cord 54F. The full band 46 has a jointless structure. In the full band 46, an angle of the band cord 54F relative to the circumferential direction is preferably not greater than 5° and more preferably not greater than 2°. The band cord 54F extends substantially in the circumferential direction.

The density of the band cord 54F in the full band 46 is not less than 20 ends/5 cm and not greater than 35 ends/5 cm. The density of the band cord 54F is represented as the number of cross-sections of the band cord 54F included per 5 cm width of the full band 46 in a cross-section of the full band 46 included in the meridian cross-section.

As described above, each edge band 48 includes the helically wound band cord 54E. The edge band 48 has a jointless structure. In the edge band 48, an angle of the band cord 54E relative to the circumferential direction is preferably not greater than 5° and more preferably not greater than 2°. The band cord 54E of the edge band 48 extends substantially in the circumferential direction.

The density of the band cord 54E in the edge band 48 is not less than 20 ends/5 cm and not greater than 35 ends/5 cm. The density of the band cord 54E is represented as the number of cross-sections of the band cord 54E included per 5 cm width of the edge band 48 in a cross-section of the edge band 48 along a plane perpendicular to the direction in which the band cord 54E extends.

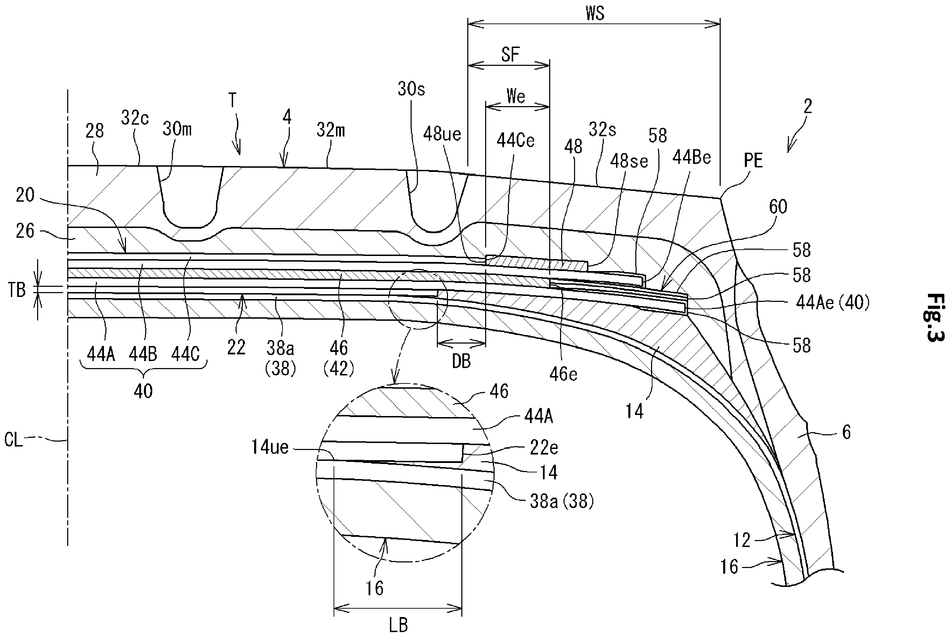

FIG. 3 shows a part of the cross-section of the tire 2 shown in FIG. 1. FIG. 3 shows the tread portion T of the tire 2.

In the tire 2, each of the end 44Ae of the first belt ply 44A and the end 44Be of the second belt ply 44B is covered with a rubber layer 58. A plurality of rubber layers 58 are further disposed between the end 44Ae of the first belt ply 44A and the end 44Be of the second belt ply 44B, each of which is covered with the rubber layer 58. In the tire 2, an edge member 60 including four rubber layers 58 in total is formed between the end 44Ae of the first belt ply 44A and the end 44Be of the second belt ply 44B. The edge member 60 is formed from a crosslinked rubber. The edge member 60 contributes to maintaining the interval between the end 44Ae of the first belt ply 44A and the end 44Be of the second belt ply 44B. In the tire 2, a change of the positional relationship between the end 44Ae of the first belt ply 44A and the end 44Be of the second belt ply 44B due to running is suppressed. The edge member 60 is a part of the reinforcing layer 20. The reinforcing layer 20 of the tire 2 includes a pair of edge members 60 in addition to the belt 40 and the band 42.

The buffer layer 22 is located between the carcass 12 and the reinforcing layer 20 in the radial direction. The buffer layer 22 is disposed such that both ends 22e thereof are opposed to each other across the equator plane CL. In the axial direction, each end 22e of the buffer layer 22 is located inward of the end 46e of the full band 46.

In FIG. 1, a length indicated by reference character WB is the width in the axial direction of the buffer layer 22. The width WB in the axial direction of the buffer layer 22 is the distance in the axial direction from one end 22e of the buffer layer 22 to the other end 22e of the buffer layer 22.

In the tire 2, the buffer layer 22 is located between the carcass ply 38 and the first belt ply 44A in the radial direction. The buffer layer 22 is located between the pair of cushion layers 14 in the axial direction. The buffer layer 22 of the tire 2 is formed from a crosslinked rubber different from the crosslinked rubber for the cushion layer 14.

As described above, in the tire 2, the full band 46 is disposed such that both ends 46e thereof are opposed to each other across the equator plane CL. The full band 46 extends in the axial direction from the equator plane CL toward each end 46e. Furthermore, in the tire 2, each edge band 48 is located outward of the end 46e of the full band 46 in the radial direction.

Although the tire 2 is a low-flatness tire, the full band 46 and the pair of edge bands 48 effectively suppress deformation of the tread portion T. A shape change of the tire 2, for example, a change of the contour (hereinafter, also referred to as case line) of the carcass 12, is suppressed, so that a change of the ground-contact shape of the tire 2 is suppressed.

As described above, the band cord 54F included in the full band 46 extends substantially in the circumferential direction. A force acts on the full band 46 of the tire 2 in a running state so as to spread from the inner side toward the outer side in the radial direction. This force increases the tension of the band cord 54F.

A tire bends when coming into contact with a road surface. Accordingly, the force acting on the full band is decreased, so that the tension of the band cord is decreased. When the tire becomes separated from the road surface to be restored, the force acting on the full band is increased, so that the tension of the band cord is increased. In the band cord of the tire in a running state, fluctuation of the tension is repeated. There is a concern that a break may occur in the band cord depending on the degree of fluctuation of the tension. When the band cord becomes broken, the holding force thereof is decreased. In this case, the full band may no longer be able to contribute to suppression of a shape change.

In the tire 2, each edge band 48 holds the end 46e of the full band 46. Fluctuation of the tension of the band cord 54F included in the full band 46 is suppressed, so that occurrence of a break of the band cord 54F due to this tension fluctuation is suppressed. The full band 46 of the tire 2 can stably exhibit the function of suppressing a shape change. The edge band 48 is narrower than the full band 46. Therefore, tension fluctuation as in the full band 46 is less likely to occur in the band cord 54E of the edge band 48. A break is less likely to occur in the band cord 54E of the edge band 48.

Furthermore, in the tire 2, the full band 46 is located between the first belt ply 44A and the second belt ply 44B in the radial direction.

The first belt ply 44A and the second belt ply 44B reduce the force acting on the full band 46. In particular, since the belt cords 50 included in the first belt ply 44A and the belt cords 50 included in the second belt ply 44B intersect each other, the force acting on the full band 46 is effectively reduced. Since fluctuation of the tension of the band cord 54F included in the full band 46 is suppressed, occurrence of a break of the band cord 54 due to this tension fluctuation is suppressed. The full band 46 of the tire 2 can stably exhibit the function of suppressing a shape change.

As described above, in the tire 2, among the belt plies 44 included in the belt 40, the first belt ply 44A is closest to the ply body 38a of the carcass ply 38, and the difference between the tilt angle θ1 of the first belt cords 50A included in the first belt ply 44A and the intersection angle of the carcass cords in the ply body 38a is large.

When the tire 2 is fitted onto a rim (not shown) and the inside of the tire 2 is filled with air, the tire 2 expands. At this time, due to the difference between the intersection angle of the carcass cords and the tilt angle θ1 of the first belt cords 50A, strain is generated between the carcass ply 38 and the first belt ply 44A. There is a possibility that, depending on the degree of the strain, damage occurs between the carcass ply 38 and the first belt ply 44A and the belt 40 cannot sufficiently hold the carcass 12.

In a conventional tire, to alleviate strain, between a belt ply corresponding to the first belt ply 44A of the tire 2 (hereinafter, referred to as corresponding ply) and a carcass ply, a belt ply (hereinafter, referred to as tilt ply) in which the tilt angle of belt cords is adjusted so as to be smaller than the intersection angle of carcass cords and larger than the tilt angle of belt cords of the corresponding ply is provided. In the conventional tire, to ensure a holding force and alleviate strain, a belt is composed of at least four belt plies.

In the tire 2, the buffer layer 22 is provided between the carcass 12 and the reinforcing layer 20. Specifically, the buffer layer 22 is provided between the carcass ply 38 and the first belt ply 44A.

The buffer layer 22 is formed from a crosslinked rubber. In the buffer layer 22, cords are not included as in the carcass ply 38 and the first belt ply 44A. The buffer layer 22 is more flexible than the carcass ply 38 and the first belt ply 44A. The buffer layer 22 contributes to alleviation of strain generated between the carcass ply 38 and the first belt ply 44A due to the difference between the intersection angle of the carcass cords and the tilt angle θ1 of the first belt cords 50A.

In the tire 2, the integrity of the carcass 12 and the belt 40 is maintained, so that the belt 40 can sufficiently hold the carcass 12. In the tire 2, the full band 46 and the pair of edge bands 48, that is, the band 42, can sufficiently exhibit the function of suppressing a shape change. The buffer layer 22 contributes to suppression of a shape change.

Furthermore, since the buffer layer 22 does not include any cord, the buffer layer 22 is lighter than the tilt ply provided in the conventional tire in order to alleviate strain. In the tire 2, although the full band 46 and the pair of edge bands 48 are provided in order to suppress a shape change, an increase in mass is suppressed.

In the conventional tire, since the tilt angle of the belt cords included in the tilt ply is larger than the tilt angle of the belt cords included in the corresponding ply, the degree of contribution of the tilt ply to ensuring the holding force of the belt is originally low. Although the belt 40 of the tire 2 is composed of at least three belt plies 44, the belt 40 exhibits the same level of holding force as the conventional belt composed of at least four belt plies. In the tire 2, a shape change is suppressed to the same extent as in the case where the full band 46 is combined with the conventional belt.

In the tire 2, suppression of a mass increase and suppression of a shape change due to running are achieved. The tire 2 can achieve improvement of uneven wear resistance while suppressing an increase in rolling resistance.

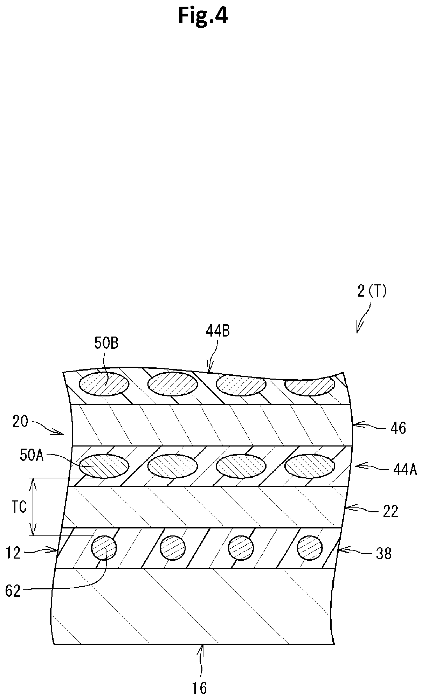

FIG. 4 shows a cross-section of the tire 2 shown in FIG. 1, taken along the equator plane CL. FIG. 4 shows a cross-section of the tread portion T. In FIG. 4, a length indicated by a double-headed arrow TC is the distance between the carcass 12 and the reinforcing layer 20. Specifically, the distance TC is the distance between the carcass ply 38 and the first belt ply 44A.

The distance TC is represented as the distance (inter-cord distance) between a carcass cord 62 included in the carcass ply 38 and the first belt cord 50A included in the first belt ply 44A on the equator plane CL. The distance TC is the thickness of a rubber component located between the carcass cord 62 and the first belt cord 50A. The buffer layer 22 is included in this rubber component. The distance TC is mainly controlled by adjusting the thickness of the buffer layer 22.

In the tire 2, the distance TC between the carcass 12 and the reinforcing layer 20 is preferably not less than 1.5 mm and not greater than 3.0 mm.

When the distance TC is set to be not less than 1.5 mm, the rubber component between the carcass 12 and the reinforcing layer 20 can effectively contribute to alleviation of strain. Occurrence of damage due to the rubber component is prevented. From this viewpoint, the distance TC is more preferably not less than 1.8 mm.

When the distance TC is set to be not greater than 3.0 mm, the rubber component between the carcass 12 and the reinforcing layer 20 can contribute to suppression of a mass increase. From this viewpoint, the distance TC is more preferably not greater than 2.5 mm and further preferably not greater than 2.0 mm.

In the tire 2, a complex elastic modulus E*b of the buffer layer 22 is preferably not less than 7.0 MPa and not greater than 12.0 MPa.

When the complex elastic modulus E*b of the buffer layer 22 is set to be not less than 7.0 MPa, the buffer layer 22 having an appropriate thickness can be formed in the tire 2. The buffer layer 22 can contribute to suppression of a mass increase. From this viewpoint, the complex elastic modulus E*b of the buffer layer 22 is more preferably not less than 8.0 MPa and further preferably not less than 9.0 MPa.

When the complex elastic modulus E*b of the buffer layer 22 is set to be not greater than 12.0 MPa, the buffer layer 22 can effectively contribute to alleviation of strain. In the tire 2, occurrence of damage due to the buffer layer 22 is prevented. From this viewpoint, the complex elastic modulus E*b of the buffer layer 22 is more preferably not greater than 11.0 MPa and further preferably not greater than 10.0 MPa.

In FIG. 3, a length indicated by reference character TB is the thickness of the buffer layer 22. This thickness TB is measured along the equator plane CL.

In the tire 2, the thickness TB of the buffer layer 22 is preferably not less than 0.5 mm and not greater than 2.0 mm.

When the thickness TB of the buffer layer 22 is set to be not less than 0.5 mm, the buffer layer 22 can effectively contribute to alleviation of strain. In the tire 2, occurrence of damage due to the buffer layer 22 is prevented. From this viewpoint, the thickness TB of the buffer layer 22 is more preferably not less than 0.8 mm.

When the thickness TB of the buffer layer 22 is set to be not greater than 2.0 mm, the buffer layer 22 can contribute to suppression of a mass increase. From this viewpoint, the thickness TB of the buffer layer 22 is more preferably not greater than 1.5 mm and further preferably not greater than 1.0 mm.

In a running state of a tire, a tread end portion moves actively. The stiffness of the portion where circumferential grooves are formed is lower than that of the portion where the circumferential grooves are not formed.

As described above, the tire 2 is a low-flatness tire. In the case where the tire 2 has the wide tread surface 24, each shoulder circumferential groove 30s of the tire 2 is located further outward in the axial direction as compared to that of a high-flatness tire. In this case, there is a concern that a shape change around the shoulder circumferential groove 30s may be increased.

In the tire 2, each end 46e of the full band 46 is located outward of the shoulder circumferential groove 30s in the axial direction. The full band 46 is located radially inward of each shoulder circumferential groove 30s.

Although the tire 2 is a low-flatness tire, the full band 46 effectively suppresses deformation around each shoulder circumferential groove 30s. Since each edge band 48 is located outward of the end 46e of the full band 46, this deformation is sufficiently suppressed. In particular, in the tire 2, a shape change around each shoulder circumferential groove 30s is effectively suppressed. From this viewpoint, in the tire 2, each end 46e of the full band 46 is preferably located outward of the shoulder circumferential groove 30s in the axial direction.

In FIG. 3, a double-headed arrow SF indicates the distance in the axial direction from the shoulder circumferential groove 30s, specifically, the outer edge of the shoulder circumferential groove 30s, to the end 46e of the full band 46. A double-headed arrow WS indicates the width in the axial direction of the shoulder land portion 32s. The width WS in the axial direction is represented as the distance in the axial direction from the inner end of the top surface of the shoulder land portion 32s (that is, the outer edge of the shoulder circumferential groove 30s) to the outer end of the top surface (in the tire 2, the end PE of the tread surface 24).

In the tire 2, the ratio (SF/WS) of the distance SF in the axial direction from the shoulder circumferential groove 30s to the end 46e of the full band 46, to the width WS in the axial direction of the shoulder land portion 32s, is preferably not greater than 50%. Accordingly, the end 46e of the full band 46 is located away from the end portion of the tread 4 which moves actively in a running state, so that fluctuation of the tension of the band cord 54 is suppressed. In the tire 2, occurrence of a break of the band cord 54 is suppressed. The full band 46 of the tire 2 contributes to suppression of a shape change. From this viewpoint, the ratio (SF/WS) is more preferably not greater than 35% and further preferably not greater than 25%.

When the ratio (SF/WS) is set to be not less than 10%, the end 46e of the full band 46 is located at an appropriate interval from the shoulder circumferential groove 30s, specifically, the bottom of the shoulder circumferential groove 30s. In the tire 2, occurrence of damage starting from the bottom of the shoulder circumferential groove 30s is suppressed. Since the width of the full band 46 is ensured, the full band 46 contributes to suppression of a shape change of the tire 2. From this viewpoint, the ratio (SF/WS) is more preferably not less than 15%.

As described above, in the tire 2, each end 46e of the full band 46 is located inward of the end 40e of the belt 40 in the axial direction. The belt 40 is wider than the full band 46. The belt 40 holds each end 46e of the full band 46. The belt 40 contributes to suppression of fluctuation of the tension of the band cord 54F included in the full band 46. Occurrence of a break of the band cord 54 due to the fluctuation of the tension is suppressed, so that the full band 46 can stably exhibit the function of suppressing a shape change. From this viewpoint, each end 46e of the full band 46 is preferably located inward of the end 40e of the belt 40 in the axial direction.

In the tire 2, in the radial direction, the first belt ply 44A is located inward of the full band 46, and the second belt ply 44B is located outward of the full band 46. The full band 46 is interposed between the first belt ply 44A and the second belt ply 44B.

As shown in FIG. 3, in the axial direction, the end 46e of the full band 46 is located inward of the end 44Ae of the first belt ply 44A, and the end 46e of the full band 46 is located inward of the end 44Be of the second belt ply 44B. In other words, the first belt ply 44A is wider than the full band 46. The second belt ply 44B is also wider than the full band 46. In the tire 2, the full band 46 is interposed between the first belt ply 44A and the second belt ply 44B which are wider than the full band 46. Fluctuation of the tension of the band cord 54F included in the full band 46 is more effectively suppressed, so that a break is less likely to occur in the band cord 54 of the full band 46. The full band 46 of the tire 2 can stably exhibit the function of suppressing a shape change. From this viewpoint, in the tire 2, preferably, the full band 46 is located between the first belt ply 44A and the second belt ply 44B in the radial direction, and in the axial direction, the end 46e of the full band 46 is located inward of the end 44Ae of the first belt ply 44A, and the end 46e of the full band 46 is located inward of the end 44Be of the second belt ply 44B.

As described above, in the tire 2, the inner end 48ue of each edge band 48 is located inward of the end 46e of the full band 46 in the axial direction. In FIG. 3, a length indicated by a double-headed arrow We is the distance in the axial direction from the end 46e of the full band 46 to the inner end 48ue of the edge band 48.

In the tire 2, the distance We in the axial direction from the end 46e of the full band 46 to the inner end 48ue of the edge band 48 is preferably not less than 10 mm. Accordingly, the edge band 48 effectively holds the end 46e of the full band 46. Fluctuation of the tension of the band cord 54F included in the full band 46 is suppressed, so that occurrence of a break of the band cord 54 due to this tension fluctuation is suppressed. The full band 46 of the tire 2 can more stably exhibit the function of suppressing a shape change. From this viewpoint, the distance We in the axial direction is preferably not less than 20 mm. From the viewpoint of suppressing the influence of the edge band 48 on the mass of the tire 2, the distance We in the axial direction is preferably not greater than 50 mm.

In the tire 2, involvement in occurrence of damage starting from the bottom of the shoulder circumferential groove 30s is taken into consideration for setting the position of the inner end 48ue of the edge band 48. From the viewpoint of effectively suppressing occurrence of damage starting from the bottom of the shoulder circumferential groove 30s, in the axial direction, the inner end 48ue of the edge band 48 is preferably located outward of the bottom of the shoulder circumferential groove 30s, and is more preferably located further outward of the shoulder circumferential groove 30s. In the tire 2, the inner end 48ue of the edge band 48 may be located inward of the bottom of the shoulder circumferential groove 30s in the axial direction. In this case, the inner end 48ue of the edge band 48 is more preferably located further inward of the shoulder circumferential groove 30s in the axial direction.

In the tire 2, the ratio (WB/W1) of the width WB in the axial direction of the buffer layer 22 to the width W1 in the axial direction of the first belt ply 44A is preferably not less than 50%. The buffer layer 22 is sufficiently joined to the first belt ply 44A and the carcass ply 38. In the tire 2, strain generated between the carcass ply 38 and the first belt ply 44A is sufficiently alleviated. From this viewpoint, the ratio (WB/W1) is more preferably not less than 55% and further preferably not less than 60%.

As shown in FIG. 3, the end 22e of the buffer layer 22 is located outward of the inner end 14ue of the cushion layer 14 in the axial direction. In the tire 2, a portion of the buffer layer 22 at the end 22e and a portion of the cushion layer 14 at the inner end 14ue are overlaid and joined to each other. No gap is formed between the buffer layer 22 and the cushion layer 14. In the tire 2, occurrence of damage starting from the boundary between the buffer layer 22 and the cushion layer 14 is effectively suppressed. From this viewpoint, the end 22e of the buffer layer 22 is preferably located outward of the inner end 14ue of the cushion layer 14 in the axial direction. In this case, from the viewpoint of appropriately maintaining the volume of the cushion layer 14 and effectively suppressing the influence of the cushion layer 14 on the mass of the tire 2, as described above, the ratio (WB/W1) of the width WB in the axial direction of the buffer layer 22 to the width W1 in the axial direction of the first belt ply 44A is more preferably set to be not less than 50%.

In FIG. 3, a double-headed arrow LB indicates the length of the overlap portion between the buffer layer 22 and the cushion layer 14 (hereinafter, referred to as overlap length). The overlap length LB is represented as the shortest distance from the inner end 14ue of the cushion layer 14 to the end 22e of the buffer layer 22. When the position of the end 22e of the buffer layer 22 coincides with the position of the inner end 14ue of the cushion layer 14 in the axial direction, the overlap length LB is 0 mm.

In the tire 2, from the viewpoint of stably maintaining the state where the portion of the buffer layer 22 at the end 22e and the portion of the cushion layer 14 at the inner end 14ue are joined to each other, the overlap length LB is preferably not less than 3 mm and more preferably not less than 5 mm. From the viewpoint that the buffer layer 22 is formed with an appropriate width and the buffer layer 22 can effectively contribute to suppression of a mass increase, the overlap length LB is preferably not greater than 15 mm and more preferably not greater than 10 mm.

In the tire 2, the buffer layer 22 is joined at the portion at the end 22e thereof to a part of the cushion layer 14. As described above, the cushion layer 14 is formed from a flexible crosslinked rubber. If, similar to the cushion layer 14, the buffer layer 22 is formed from a flexible crosslinked rubber, it is necessary to increase the thickness TB of the buffer layer 22 in order to alleviate strain. The thick buffer layer 22 increases the mass of the tire.

From the viewpoint that the buffer layer 22 having an appropriate thickness TB is formed and the buffer layer 22 can effectively contribute to suppression of a mass increase, the buffer layer 22 is preferably formed from a crosslinked rubber that is harder than the crosslinked rubber for the cushion layer 14. In other words, the complex elastic modulus E*b of the buffer layer 22 is preferably higher than the complex elastic modulus E*c of the cushion layer 14. Specifically, the ratio (E*b/E*c) of the complex elastic modulus E*b of the buffer layer 22 to the complex elastic modulus E*c of the cushion layer 14 is preferably not less than 1.2, more preferably not less than 1.4, and further preferably not less than 1.6. The ratio (E*b/E*c) is preferably not greater than 3.8, more preferably not greater than 3.4, and further preferably not greater than 3.1.

For example, as shown in FIG. 3, in a zone of the tire 2 from the inner end 48ue of the edge band 48 to the end 46e of the full band 46, the full band 46 and the edge band 48 overlap each other in the radial direction. In the band 42 of the tire 2, the zone from the inner end 48ue of the edge band 48 to the end 46e of the full band 46 has high stiffness. Therefore, if the buffer layer 22, which is formed from a crosslinked rubber, is disposed inward of this zone, there is a concern that the distribution of strain generated between the carcass ply 38 and the first belt ply 44A may become uneven and damage may occur at the position corresponding to the inner end 48ue of the edge band 48.

In the tire 2, the end 22e of the buffer layer 22 is located inward of the inner end 48ue of the edge band 48 in the axial direction. Since the buffer layer 22 is not disposed within the zone from the inner end 48ue of the edge band 48 to the end 46e of the full band 46, occurrence of damage due to strain generated between the carcass ply 38 and the first belt ply 44A is effectively suppressed in the tire 2. From this viewpoint, the end 22e of the buffer layer 22 is preferably located inward of the inner end 48ue of the edge band 48 in the axial direction.

In FIG. 3, a length indicated by a double-headed arrow DB is the distance in the axial direction from the end 22e of the buffer layer 22 to the inner end 48ue of the edge band 48.

From the viewpoint of effectively suppressing occurrence of damage, the distance DB in the axial direction is preferably not less than 1 mm and more preferably not less than 3 mm. In the tire 2, as described above, from the viewpoint of alleviating strain generated between the carcass ply 38 and the first belt ply 44A, the ratio (WB/W1) of the width WB in the axial direction of the buffer layer 22 to the width W1 in the axial direction of the first belt ply 44A is preferably set to be not less than 50%. Therefore, a preferable upper limit of the distance DB in the axial direction is not set.

In the tire 2, a breaking load of each first belt cord 50A is preferably not less than 2000 N. The number of belt plies 44 included in the belt 40 of the tire 2 is smaller than that of the belt of the conventional tire, but the belt 40 still effectively contributes to maintaining the strength of the tire 2.

Since the breaking load of each first belt cord 50A is not less than 2000 N, conventional belt cords having a breaking load of not less than 1000 N can be used as the second belt cords 50B and the third belt cords 50C in the tire 2. The belt 40 contributes to maintaining strength and reducing mass.

The tire 2 can suppress a mass increase while maintaining strength.

As is obvious from the above description, according to the present invention, the heavy duty pneumatic tire 2 that can achieve suppression of a mass increase and suppression of a shape change due to running, is obtained. The present invention exhibits a remarkable effect in the low-flatness heavy duty pneumatic tire 2 having a nominal aspect ratio of not greater than 65%.

### EXAMPLES

Hereinafter, the present invention will be described in further detail by means of examples, etc., but the present invention is not limited to these examples.

### [Example 1]

A heavy duty pneumatic tire (tire size = 355/50R22.5) having the basic structure shown in FIG. 1 to FIG. 3 and having specifications shown in Table 1 below was obtained.

In Example 1, the belt was composed of three belt plies including a first belt ply, a second belt ply, and a third belt ply. The belt cords of each belt ply were steel cords.

Each of the tilt angle θ1 of the first belt cords, the tilt angle θ2 of the second belt cords, and the tilt angle θ3 of the third belt cords was set to 15° (degrees).

The tilt direction of the first belt cords was opposite to the tilt direction of the second belt cords, and the tilt direction of the second belt cords was the same as the tilt direction of the third belt cords.

The band was composed of a full band and a pair of edge bands. The fact that the band includes the full band is indicated as "Y" in the cell for FB in Table 1, and the fact that the band includes the edge bands is indicated as "Y" in the cell for EB in Table 1. The band cords of the full band and the edge bands were steel cords.

The full band was provided between the first belt ply and the second belt ply, and each edge band was disposed radially outward of the end of the full band.

The distance We in the axial direction from the end of the full band to the inner end of the edge band was 15 mm.

A buffer layer was provided between the first belt ply and the carcass ply. This is indicated as "Y" in the cell for buffer layer in Table 1. The complex elastic modulus E*b of the buffer layer was 10.0 MPa. The distance TC between the carcass and the reinforcing layer was 2.0 mm.

The distance DB in the axial direction from the end of the buffer layer to the inner end of the edge band was 10 mm.

The ratio (WB/W1) of the width WB in the axial direction of the buffer layer to the width W1 in the axial direction of the first belt ply was 60%.

The overlap length LB between the buffer layer and the cushion layer was 7 mm.

The complex elastic modulus E*c of the cushion layer was 3.4 MPa.

### [Comparative Example 1]

A tire of Comparative Example 1 was obtained in the same manner as Example 1, except that the buffer layer was replaced by a tilt ply. The tire of Comparative Example 1 is a conventional tire.

The belt of Comparative Example 1 was composed of four belt plies. In Comparative Example 1, a tilt angle θt of the belt cords of the tilt ply was set to 50°. The tilt direction of the belt cords of the tilt ply was the same as the tilt direction of the first belt cords. The belt cords of the tilt ply were steel cords. The belt was formed such that the tilt ply had a width in the axial direction equal to the width in the axial direction of the second belt ply.

### [Comparative Example 2]

A tire of Comparative Example 2 was obtained in the same manner as Example 1, except that no edge band was provided.

### [Example 2]

A tire of Example 2 was obtained in the same manner as Example 1, except that the distance TC was set as shown in Table 1 below.

### [Example 3]

A tire of Example 3 was obtained in the same manner as Example 1, except that the complex elastic modulus E*b of the buffer layer was set as shown in Table 2 below.

### [Examples 4 and 5]

Tires of Examples 4 and 5 were obtained in the same manner as Example 1, except that the position of the inner end of each edge band was changed such that the distance We in the axial direction and the distance DB in the axial direction were set as shown in Table 2 below.

### [Example 6]

A tire of Example 6 was obtained in the same manner as Example 1, except that the position of the inner end of each cushion layer was adjusted such that the overlap length LB was 0 mm.

### [Profile Change]

A test tire was fitted onto a rim (11.75×22.5) and inflated with air to adjust the internal pressure of the tire to a normal internal pressure. The tire was caused to run on a drum tester at a speed of 80 km/h for 1000 km, and a profile of the case line on the inner side of the shoulder circumferential groove was obtained. The profile of the case line was compared with the profile of the case line before running to confirm a change in profile before and after running. The results are represented as indexes according to the following ratings in Tables 1 and 2 below. A higher value represents that a change in profile is reduced. In the running test, a normal load was applied to the tire. In this evaluation, the index is required to be 95 or higher.

| Change amount | Index |
|---|---|
| 0.0 mm to 0.5 mm | 100 |
| 0.6 mm to 1.0 mm | 95 |
| 1.1 mm to 1.5 mm | 90 |
| 1.6 mm to 2.0 mm | 85 |
| 2.1 mm to 2.5 mm | 80 |

### [JLB Break Resistance]

A test tire was fitted onto a rim (11.75×22.5) and inflated with air to adjust the internal pressure of the tire to a normal internal pressure. The tire was mounted to a drive shaft of a test vehicle (tractor head). A trailer loaded with luggage was towed by the test vehicle, and the test vehicle was caused to run on a test course composed of an asphalt road surface, until the wear rate of the tire reached 30% in terms of mass. After running, the tire was inspected by shearography or X-ray to confirm the presence/absence of internal damage. When internal damage was confirmed, the tire was disassembled and it was confirmed whether this internal damage was a break of the band cord of the full band. The results are represented in Tables 1 and 2 below according to the following ratings. The result is required not to correspond to the rating D.

| | |
|---|---|
| Case where there is no break portion in band cord | A |
| Case where there is one break portion in band cord | B |
| Case where there are two break portions in band cord | C |
| Case where there are three or more break portions in band cord | D |

### [Tire Mass]

The mass of each test tire was measured. The results are represented in Tables 1 and 2 below as indexes with the result of Example 1 being regarded as 100. A lower value indicates that the tire is lighter. If the index indicating the result is 110 or lower, it is determined that an increase in mass is suppressed, and the mass is acceptable.

### [Tire Strength]

Using a plunger testing machine, in accordance with Section 5.1 "Tire strength (breaking energy) test" in JIS D4230, a conical weight (plunger diameter: 50 mm, height: 100 mm, weight: 5 kg) was dropped from above the tread portion, and the dropping height when the tire became broken was converted into energy. The results are represented in Tables 1 and 2 below as indexes with the result of Example 1 being regarded as 100. The higher the value is, the better the tire strength is. The index indicating the result is required to be 95 or higher.

**[Table 1]**

| | | Comparative Example 1 | Comparative Example 2 | Example 1 | Example 2 |
|---|---|---|---|---|---|
| Tilt ply | θt [°] | 50 | - | - | - |
| First belt ply | θ1 [°] | 15 | 15 | 15 | 15 |
| Second belt ply | θ2 [°] | 15 | 15 | 15 | 15 |
| Third belt ply | θ3 [°] | 15 | 15 | 15 | 15 |
| FB | | Y | Y | Y | Y |
| EB | | Y | N | Y | Y |
| We [mm] | | 15.0 | - | 15.0 | 15.0 |
| Buffer layer | | N | Y | Y | Y |
| TC [mm] | | 1.0 | 2.0 | 2.0 | 4.0 |
| E*b [MPa] | | - | 10.0 | 10.0 | 10.0 |
| DB [mm] | | - | - | 10.0 | 10.0 |
| LB [mm] | | - | 7.0 | 7.0 | 7.0 |
| Profile change | | 100 | 90 | 100 | 100 |
| JLB break resistance | | A | C | A | A |
| Tire mass | | 115 | 95 | 100 | 110 |
| Tire strength | | 105 | 95 | 100 | 107.5 |

**[Table 2]**

| | | Example 3 | Example 4 | Example 5 | Example 6 |
|---|---|---|---|---|---|
| Tilt ply | θt [°] | - | - | - | - |
| First belt ply | θ1 [°] | 15 | 15 | 15 | 15 |
| Second belt ply | θ2 [°] | 15 | 15 | 15 | 15 |
| Third belt ply | θ3 [°] | 15 | 15 | 15 | 15 |
| FB | | Y | Y | Y | Y |
| EB | | Y | Y | Y | Y |
| We [mm] | | 15.0 | 5.0 | 35.0 | 15.0 |
| Buffer layer | | Y | Y | Y | Y |
| TC [mm] | | 2.0 | 2.0 | 2.0 | 2.0 |
| E*b [MPa] | | 6.0 | 10.0 | 10.0 | 10.0 |
| DB [mm] | | 10.0 | 20.0 | -10.0 | 10.0 |
| LB [mm] | | 7.0 | 7.0 | 7.0 | 0.0 |
| Profile change | | 100 | 95 | 100 | 100 |
| JLB break resistance | | A | B | A | A |
| Tire mass | | 100 | 97.5 | 105 | 100 |
| Tire strength | | 97.5 | 100 | 100 | 97.5 |

As shown in Tables 1 and 2, in the Examples, suppression of a mass increase and suppression of a shape change due to running are achieved. From the evaluation results, advantages of the present invention are clear.

The above-described technology for achieving suppression of a mass increase and suppression of a shape change due to running can be applied to various tires.

## Claims

1. A heavy duty pneumatic tire (2) having a nominal aspect ratio of not greater than 65%, the heavy duty pneumatic tire (2) comprising:
a tread (4) having at least three circumferential grooves (30) formed thereon;
a pair of sidewalls (6) each connected to an end of the tread (4) and located inward of the tread (4) in a radial direction;
a pair of beads (8) each located inward of the sidewall (6) in the radial direction;
a carcass (12) located inward of the tread (4) and the pair of sidewalls (6) and extending on and between one bead (8) and the other bead (8);
a reinforcing layer (20) located inward of the tread (4) in the radial direction; and
a buffer layer (22) located between the carcass (12) and the reinforcing layer (20) in the radial direction, wherein
among the at least three circumferential grooves (30), a circumferential groove (30) located on each outer side in an axial direction is a shoulder circumferential groove (30s),
the reinforcing layer (20) includes a belt (40) including a large number of belt cords (50) aligned with each other, and a band (42) including a helically wound band cord (54),
the belt (40) includes a first belt ply (44A), a second belt ply (44B), and a third belt ply (44C), wherein the belt ply located on the innermost side in the radial direction is the first belt ply (44A), and
the first belt ply (44A), the second belt ply (44B), and the third belt ply (44C) are aligned in the radial direction in this order,
a direction in which the belt cords (50) included in the first belt ply (44A) are tilted is opposite to a direction in which the belt cords (50B) included in the second belt ply (44B) are tilted,
the band (42) includes a full band (46) disposed such that both ends (46e) thereof are opposed to each other across an equator plane (CL), and a pair of edge bands (48) each located outward of the end (46e) of the full band (46) in the radial direction,
the full band (46) is located between the first belt ply (44A) and the second belt ply (44B) in the radial direction, and
the buffer layer (22) is formed from a crosslinked rubber.

2. The heavy duty pneumatic tire (2) according to claim 1, wherein the buffer layer (22) has a complex elastic modulus (E*b) of not less than 7.0 MPa and not greater than 12.0 MPa. wherein the complex elastic modulus is measured according to the standards of JIS K6394 at a temperature of 70°C, an initial strain of 10%, a dynamic strain of 2%, a frequency of 10 Hz and tensile deformation mode.

3. The heavy duty pneumatic tire (2) according to claim 1 or 2, wherein each end (46e) of the full band (46) is located outward of the shoulder circumferential groove (30s) in the axial direction.

4. The heavy duty pneumatic tire (2) according to any one of claims 1 to 3, wherein a distance (We) in the axial direction from the end (46e) of the full band (46) to an inner end (48ue) of the edge band (48) is not less than 10 mm.

5. The heavy duty pneumatic tire (2) according to any one of claims 1 to 4, wherein each end (22e) of the buffer layer (22) is located inward of the inner end (48ue) of the edge band (48) in the axial direction.

6. The heavy duty pneumatic tire (2) according to any one of claims 1 to 5, wherein a ratio (WB/W1) of a width (WB) in the axial direction of the buffer layer (22) to a width (W1) in the axial direction of the first belt ply (44A) is not less than 50%.

7. The heavy duty pneumatic tire (2) according to any one of claims 1 to 6, further comprising a pair of cushion layers (14) located outward of the buffer layer (22) in the axial direction, wherein
each of the pair of cushion layers (14) is located between the reinforcing layer (20) and the carcass (12) at an end (20e) of the reinforcing layer (20), and
each end (22e) of the buffer layer (22) is located outward of an inner end (14ue) of the cushion layer (14) in the axial direction.

8. The heavy duty pneumatic tire (2) according to claim 7, wherein the complex elastic modulus (E*b) of the buffer layer (22) is higher than a complex elastic modulus (E*c) of each cushion layer (14).

## Patentansprüche

1. Schwerlastluftreifen (2) mit einem Nennaspektverhältnis von nicht mehr als 65 %, wobei der Schwerlastluftreifen (2) umfasst:
eine Lauffläche (4) mit mindestens drei daran ausgebildeten Umfangsrillen (30);
ein Paar Seitenwände (6), die jeweils mit einem Ende der Lauffläche (4) verbunden sind und in einer radialen Richtung innen von der Lauffläche (4) angeordnet sind;
ein Paar Wülste (8), die jeweils in der radialen Richtung innen von der Seitenwand (6) angeordnet sind;
eine Karkasse (12), die innen von der Lauffläche (4) und dem Paar Seitenwände (6) angeordnet ist und sich auf und zwischen einem Wulst (8) und dem anderen Wulst (8) erstreckt;
eine Verstärkungsschicht (20), die in der radialen Richtung innen von der Lauffläche (4) angeordnet ist; und
eine Pufferschicht (22), die in der radialen Richtung zwischen der Karkasse (12) und der Verstärkungsschicht (20) angeordnet ist, wobei
unter den mindestens drei Umfangsrillen (30) eine Umfangsrille (30), die in einer axialen Richtung auf jeder Außenseite angeordnet ist, eine Schulterumfangsrille (30s) ist,
die Verstärkungsschicht (20) einen Gürtel (40), der eine große Anzahl von miteinander ausgerichteten Gürtelkorden (50) umfasst, und ein Band (42) umfasst, das einen spiralförmig gewickelten Bandkord (54) umfasst,
der Gürtel (40) eine erste Gürtellage (44A), eine zweite Gürtellage (44B) und eine dritte Gürtellage (44C) umfasst, wobei die Gürtellage, die in der radialen Richtung auf der innersten Seite angeordnet ist, die erste Gürtellage (44A) ist, und
die erste Gürtellage (44A), die zweite Gürtellage (44B) und die dritte Gürtellage (44C) in dieser Reihenfolge in der radialen Richtung ausgerichtet sind,
eine Richtung, in der die in der ersten Gürtellage (44A) enthaltenen Gürtelkorde (50) geneigt sind, entgegengesetzt zu einer Richtung ist, in der die in der zweiten Gürtellage (44B) enthaltenen Gürtelkorde (50B) geneigt sind,
das Band (42) ein Vollband (46), das so angeordnet ist, dass beide Enden (46e) davon über eine Äquatorebene (CL) einander gegenüberliegen, und ein Paar Randbänder (48) umfasst, die jeweils in der radialen Richtung außen von dem Ende (46e) des Vollbands (46) angeordnet sind,
das Vollband (46) in der radialen Richtung zwischen der ersten Gürtellage (44A) und der zweiten Gürtellage (44B) angeordnet ist, und
die Pufferschicht (22) aus einem vernetzten Kautschuk gebildet ist.

2. Schwerlastluftreifen (2) nach Anspruch 1, wobei die Pufferschicht (22) einen komplexen Elastizitätsmodul (E*b) von nicht weniger als 7,0 MPa und nicht mehr als 12,0 MPa aufweist, wobei der komplexe Elastizitätsmodul gemäß den Standards von JIS K6394 bei einer Temperatur von 70 °C, einer Anfangsdehnung von 10 %, einer dynamischen Dehnung von 2 %, einer Frequenz von 10 Hz und einem Zugverformungsmodus gemessen ist.

3. Schwerlastluftreifen (2) nach Anspruch 1 oder 2, wobei jedes Ende (46e) des Vollbands (46) in der axialen Richtung außen von der Schulterumfangsrille (30s) angeordnet ist.

4. Schwerlastluftreifen (2) nach einem der Ansprüche 1 bis 3, wobei ein Abstand (We) in der axialen Richtung von dem Ende (46e) des Vollbands (46) zu einem inneren Ende (48ue) des Randbands (48) nicht weniger als 10 mm beträgt.

5. Schwerlastluftreifen (2) nach einem der Ansprüche 1 bis 4, wobei jedes Ende (22e) der Pufferschicht (22) in der axialen Richtung innen von dem inneren Ende (48ue) des Randbands (48) angeordnet ist.

6. Schwerlastluftreifen (2) nach einem der Ansprüche 1 bis 5, wobei ein Verhältnis (WB/W1) einer Breite (WB) in der axialen Richtung der Pufferschicht (22) zu einer Breite (W1) in der axialen Richtung der ersten Gürtellage (44A) nicht weniger als 50 % beträgt.

7. Schwerlastluftreifen (2) nach einem der Ansprüche 1 bis 6, ferner umfassend ein Paar Polsterschichten (14), die in der axialen Richtung außen von der Pufferschicht (22) angeordnet sind, wobei
jede des Paars Polsterschichten (14) zwischen der Verstärkungsschicht (20) und der Karkasse (12) an einem Ende (20e) der Verstärkungsschicht (20) angeordnet ist, und
jedes Ende (22e) der Pufferschicht (22) in der axialen Richtung außen von einem inneren Ende (14ue) der Polsterschicht (14) angeordnet ist.

8. Schwerlastluftreifen (2) nach Anspruch 7, wobei der komplexe Elastizitätsmodul (E*b) der Pufferschicht (22) höher als ein komplexer Elastizitätsmodul (E*c) jeder Polsterschicht (14) ist.

## Revendications

1. Bandage pneumatique pour service intensif (2) ayant un rapport d'aspect nominal qui n'est pas supérieur à 65 %, le bandage pneumatique pour service intensif (2) comprenant :
une bande de roulement (4) ayant au moins trois rainures circonférentielles (30) formées sur celle-ci ;
une paire de parois latérales (6), chacune étant connectée à une extrémité de la bande de roulement (4) et située à l'intérieur de la bande de roulement (4) dans une direction radiale ;
une paire de talons (8), chacun étant situé à l'intérieur de la paroi latérale (6) dans la direction radiale ;
une carcasse (12) située à l'intérieur de la bande de roulement (4) et de la paire de parois latérales (6) et s'étendant sur et entre un talon (8) et l'autre talon (8) ;
une couche de renforcement (20) située à l'intérieur de la bande de roulement (4) dans la direction radiale ; et
une couche tampon (22) située entre la carcasse (12) et la couche de renforcement (20) dans la direction radiale, dans lequel
parmi lesdites au moins trois rainures circonférentielles (30), une rainure circonférentielle (30) située sur chaque côté extérieur dans une direction axiale est une rainure circonférentielle d'épaulement (30s),
la couche de renforcement (20) inclut une ceinture (40) incluant un grand nombre de câblés de ceinture (50) alignés les uns avec les autres, et une bande (42) incluant un câblé de bande enroulé de manière hélicoïdale (54),
la ceinture (40) inclut une première nappe de ceinture (44A), une deuxième nappe de ceinture (44B), et une troisième nappe de ceinture (44C), la nappe de ceinture située sur le côté le plus intérieur dans la direction radiale étant la première nappe de ceinture (44A), et
la première nappe de ceinture (44A), la deuxième nappe de ceinture (44B), et la troisième nappe de ceinture (44C) sont alignées dans la direction radiale dans cet ordre,
une direction dans laquelle les câblés de ceinture (50) inclus dans la première nappe de ceinture (44A) sont inclinés est opposée à une direction dans laquelle les câblés de ceinture (50B) inclus dans la seconde nappe de ceinture (44B) sont inclinés,
la bande (42) inclut une bande complète (46) disposée de telle sorte que les deux extrémités (46e) de celle-ci sont opposées l'une à l'autre à travers un plan d'équateur (CL), et une paire de bandes de bord (48), chacune étant située à l'extérieur de l'extrémité (46e) de la bande complète (46) dans la direction radiale,
la bande complète (46) est située entre la première nappe de ceinture (44A) et la deuxième nappe de ceinture (44B) dans la direction radiale, et
la couche tampon (22) est formée à partir d'un caoutchouc réticulé.

2. Bandage pneumatique pour service intensif (2) selon la revendication 1, dans lequel la couche tampon (22) a un module d'élasticité complexe (E*b) qui n'est pas inférieur à 7,0 MPa et qui n'est pas supérieur à 12,0 MPa, le module d'élasticité complexe étant mesuré selon les standards de la norme industrielle japonaise JIS K6394 à une température de 70 °C, une contrainte initiale de 10 %, une contrainte dynamique de 2 %, une fréquence de 10 Hz et dans un mode de déformation en traction.

3. Bandage pneumatique pour service intensif (2) selon la revendication 1 ou 2, dans lequel chaque extrémité (46e) de la bande complète (46) est située à l'extérieur de la rainure circonférentielle d'épaulement (30s) dans la direction axiale.

4. Bandage pneumatique pour service intensif (2) selon l'une quelconque des revendications 1 à 3, dans lequel une distance (We) dans la direction axiale depuis l'extrémité (46e) de la bande complète (46) jusqu'à une extrémité intérieure (48ue) de la bande de bord (48) n'est pas inférieure à 10 mm.

5. Bandage pneumatique pour service intensif (2) selon l'une quelconque des revendications 1 à 4, dans lequel chaque extrémité (22e) de la couche tampon (22) est située à l'intérieur de l'extrémité intérieure (48ue) de la bande de bord (48) dans la direction axiale.

6. Bandage pneumatique pour service intensif (2) selon l'une quelconque des revendications 1 à 5, dans lequel un rapport (WB/W1) d'une largeur (WB) dans la direction axiale de la couche tampon (22) sur une largeur (W1) dans la direction axiale de la première nappe de ceinture (44A) n'est pas inférieur à 50 %.

7. Bandage pneumatique pour service intensif (2) selon l'une quelconque des revendications 1 à 6, comprenant en outre une paire de couches d'amortissement (14) situées à l'extérieur de la couche tampon (22) dans la direction axiale, dans lequel
chacune de la paire de couches d'amortissement (14) est située entre la couche de renforcement (20) et la carcasse (12) au niveau d'une extrémité (20e) de la couche de renforcement (20), et
chaque extrémité (22e) de la couche tampon (22) est située à l'extérieur d'une extrémité intérieure (14ue) de la couche d'amortissement (14) dans la direction axiale.

8. Bandage pneumatique pour service intensif (2) selon la revendication 7, dans lequel le module d'élasticité complexe (E*b) de la couche tampon (22) est plus élevé qu'un module d'élasticité complexe (E*c) de chaque couche d'amortissement (14).
